# EUROPÄISCHE PATENTSCHRIFT

(11) **EP 4 482 696 B1**
(45) Veröffentlichungstag und Bekanntmachung des Hinweises auf die Patenterteilung: **17.06.2026**
(21) Anmeldenummer: 23704327.8
(22) Anmeldetag: 08.02.2023
(51) Int. Cl.: B60L 3/00, B60L 3/04, B60L 50/53

(54) **VERFAHREN ZUM BETRIEB EINES HYBRID-BATTERIEOBERLEITUNGSFAHRZEUGS UND HYBRID-BATTERIEOBERLEITUNGSFAHRZEUG**
METHOD FOR OPERATING A HYBRID BATTERY TROLLEY VEHICLE, AND HYBRID BATTERY TROLLEY VEHICLE
PROCÉDÉ DE FONCTIONNEMENT D'UN VÉHICULE À CHARIOT À BATTERIE HYBRIDE ET VÉHICULE À CHARIOT À BATTERIE HYBRIDE

(30) Priorität: 22.02.2022 DE 102022104099
(43) Veröffentlichungstag der Anmeldung: 01.01.2025
(73) Patentinhaber: Kiepe Electric GmbH, 40599 Düsseldorf (DE)
(72) Erfinder: WALZEL, Sebastian, 59427 Unna (DE); MANHELLER, Marcel, 50129 Bergheim (DE)
(74) Vertreter: Feder Walter Ebert
(86) Internationale Anmeldenummer: PCT/EP2023/053090
(87) Internationale Veröffentlichungsnummer: WO 2023/161025

(56) Entgegenhaltungen:
- DE-B3- 102019 213 980

## Beschreibung

Die vorliegende Erfindung betrifft ein Verfahren zum Betrieb eines Hybrid-Batterieoberleitungsfahrzeugs, welches ein nicht geerdetes Fahrzeugchassis, ein elektrisches Bordnetz, einen Oberleitungsstromabnehmer, einen Gleichspannungswandler und einen Batteriespeicher aufweist, wobei das Hybrid-Batterieoberleitungsfahrzeug zwischen einem Oberleitungsbetrieb, in welchem das Bordnetz über den Oberleitungsstromabnehmer und den Gleichspannungswandler mit Energie versorgt wird, wobei das Bordnetz an sekundärseitige Anschlüsse des Gleichspannungswandlers angeschlossen ist und einem Batteriebetrieb, in welchem das Bordnetz über den Batteriespeicher mit Energie versorgt wird, umgeschaltet wird, wobei das elektrische Bordnetz durch den Gleichspannungswandler galvanisch vom Oberleitungsstromabnehmer getrennt ist. Ein weiterer Gegenstand der Erfindung bildet ein Hybrid-Batterieoberleitungsfahrzeug mit einem nicht geerdeten Fahrzeugchassis, einem elektrischen Bordnetz, einem Oberleitungsstromabnehmer und einem Gleichspannungswandler zur Energieversorgung des Bordnetzes in einem Oberleitungsbetrieb, wobei das Bordnetz an sekundärseitige Anschlüsse des Gleichspannungswandlers angeschlossen ist, und einem Batteriespeicher zur Energieversorgung des Bordnetzes in einem Batteriebetrieb, wobei das elektrische Bordnetz durch den Gleichspannungswandler galvanisch vom Oberleitungsstromabnehmer getrennt ist.

Bei über eine Oberleitung mit Energie versorgten elektrischen Oberleitungsfahrzeugen, wie beispielsweise Trolleybussen, kann aus Gründen der Reichweitenerhöhung, insbesondere zum Befahren oberleitungsloser Streckenabschnitte, ein Batteriespeicher in das Fahrzeug integriert werden. Diese Fahrzeuge werden als Hybrid-Batterieoberleitungsfahrzeug bezeichnet, bei welchen es sich insbesondere um Busse für den Nahverkehr handelt.

Anders als bei schienengebundenen Fahrzeugen mit einem über die Schienen geerdeten Chassis weisen Hybrid-Batterieoberleitungsfahrzeuge, beispielsweise aufgrund einer Gummibereifung, ein nicht geerdetes Fahrzeugchassis auf, bei welchem im Normalbetrieb kein elektrischer Kontakt zwischen dem Fahrzeugchassis und dem Fahrbahngrund besteht. Ihr elektrisches Bordnetz, welches ein oder mehrere elektrische Verbraucher und andere elektrische Komponenten umfasst, nutzt daher das Potential des Fahrzeugchassis als Bezugserde.

Ein Hybrid-Batterieoberleitungsfahrzeug, wie aus der deutschen Patentschrift DE 10 2019 213 980 B3 bekannt, kann in zwei Betriebsmodi betrieben werden, dem Oberleitungsbetrieb und dem Batteriebetrieb. Um die Art der Energieversorgung des Hybrid-Batterieoberleitungsfahrzeugs zu ändern, kann zwischen dem Oberleitungsbetrieb und dem Batteriebetrieb umgeschaltet werden, das heißt es kann vom Oberleitungsbetrieb in den Batteriebetrieb und vom Batteriebetrieb in den Oberleitungsbetrieb gewechselt werden.

Im Oberleitungsbetrieb wird das Bordnetz von der Oberleitung eines Oberleitungsnetztes mit Energie versorgt. Um zur Aufnahme der Energie mit der Oberleitung verbunden zu werden, weist das Hybrid-Batterieoberleitungsfahrzeug, insbesondere zwei, Oberleitungsstromabnehmer auf. Diese können mit der Oberleitung in Kontakt gebracht werden, um eine elektrische Verbindung mit dieser herzustellen. Die über die Oberleitungsstromabnehmer aufgenommene Energie wird an einen Gleichspannungswandler des Hybrid-Batterieoberleitungsfahrzeugs weitergeleitet. Dieser Gleichspannungswandler wandelt die an seiner Primärseite anliegende Gleichspannung der Oberleitung in eine sekundärseitige Gleichspannung um, welche an das Bordnetz angelegt wird. Auf diese Weise wird das Bordnetz im Oberleitungsbetrieb über den Oberleitungsstromabnehmer und den Gleichspannungswandler mit Energie versorgt.

Im Batteriebetrieb wird das Bordnetz hingegen über den Batteriespeicher mit Energie versorgt. Der Batteriespeicher legt dabei mit Spannungen ab typischerweise 500 V im Vergleich zum Oberleitungsbetrieb eine geringere Gleichspannung an das Bordnetz an.

Beim reinen Batteriebetrieb werden an die Spannungsfestigkeit der Komponenten des Bordnetzes daher vergleichsweise geringe Anforderungen gestellt.

Dennoch kann bislang bei einem Hybrid-Batterieoberleitungsfahrzeug nicht auf die kostengünstigeren und geringere Spannungsfestigkeiten aufweisenden Komponenten eines reinen Batterieoberleitungsfahrzeugs zurückgegriffen werden. Denn da im Oberleitungsbetrieb eine im Vergleich zum Batteriebetrieb höhere Gleichspannung an das Bordnetz angelegt wird, müssen die Komponenten auf diese höhere Gleichspannung ausgelegt sein. Dies erfordert die Verwendung von Komponenten mit einer höheren Spannungsfestigkeit, um das Gefährdungspotential für Personal und Passagiere durch die bei höheren Spannungen des Bordnetzes entsprechend höheren Fehlerspannungen, welche bei einem Isolationsfehler zwischen einer Komponente und dem Fahrzeugchassis als Bezugserde abfällt, zu verringern.

Alternativ könnte der Gleichspannungswandler derart dimensioniert werden, dass dieser eine geringere Gleichspannung an das Bordnetz anlegt, welche der im Batteriebetrieb anliegenden Gleichspannung entspricht. Bei gleicher Leistung würde eine Verringerung der vom Gleichspannungswandler an das Bordnetz angelegten Spannung jedoch die Einspeisung einer höheren Stromstärke des Bordnetzes bedeuten. Diese höhere Stromstärke würde wiederum die Verwendung größere Leitungsquerschnitte in und zwischen den Komponenten des Bordnetzes erfordern, was mit einem gesteigerten Materialaufwand und entsprechenden Kosten verbunden wäre. Auf die kostengünstigeren Komponenten eines reinen Batterieoberleitungsfahrzeugs kann auch in diesem Fall nicht zurückgegriffen werden. Weiterhin würde die Verlustleistung in allen Komponenten des Bordnetzes proportional ansteigen, wenn die Stromstärke erhöht wird, und somit der Wirkungsgrad verschlechtert wird.

Die Aufgabe der vorliegenden Erfindung liegt daher darin, die Verwendung kostengünstiger und hinsichtlich ihrer Spannungsfestigkeit auf Gleichspannungen im Batteriebetrieb ausgelegter Komponenten eines reinen Batterieoberleitungsfahrzeugs zum Betrieb eines Hybrid-Batterieoberleitungsfahrzeug ohne Steigerung des Gefährdungspotentials für Personal und Passagiere zu ermöglichen.

Diese Aufgabe wird bei einem Verfahren der eingangs genannten Art dadurch gelöst, dass bei der Umschaltung vom Batteriebetrieb in den Oberleitungsbetrieb ein mittlerer sekundärseitiger Anschluss des Gleichspannungswandlers zur Reduktion von am Bordnetz anliegenden Ausgangsspannungen des Gleichspannungswandlers relativ zur Bezugserde des Bordnetzes elektrisch mit dem Fahrzeugchassis, welches die Bezugserde bildet, verbunden wird.

Durch die elektrische Verbindung des Gleichspannungswandlers mit dem Fahrzeugchassis wird die Bezugserde des Bordnetzes auf eine zwischen den Potentialen der sekundärseitigen Anschlüsse des Gleichspannungswandlers, über welche die Gleichspannung an das Bordnetz angelegt wird, liegendes Potential festgelegt. Die über die sekundärseitigen Anschlüsse am Bordnetz anliegenden Ausgangsspannungen des Gleichspannungswandlers werden auf diese Weise relativ zur Bezugserde des Bordnetzes reduziert. Die Potentialdifferenz zwischen den am Bordnetz anliegenden Ausgangsspannungen, das heißt die Gesamtspannung des Gleichspannungswandlers kann auf diese Weise zur Optimierung der Kosten und des Wirkungsgrades weiterhin im Vergleich zur im Batteriebetrieb am Bordnetz anliegenden Gleichspannung höher sein. Die Komponenten des Bordnetzes werden mit der Gesamtspannung versorgt. Jedoch wird die Fehlerspannung zur Bezugserde im Bordnetz reduziert, so dass die Komponenten keine höhere Spannungsfestigkeit aufweisen müssen. Durch die elektrische Verbindung des Gleichspannungswandlers mit dem Fahrzeugchassis bei der Umschaltung vom Batteriebetrieb in den Oberleitungsbetrieb können kostengünstigere und geringere Spannungsfestigkeiten aufweisende Komponenten eines reinen Batterieoberleitungsfahrzeugs verwendet werden, ohne das Gefährdungspotential für Personal und Passagiere zu steigern.

Bei einer vorteilhaften mittigen Erdung des Gleichspannungswandlers über seinen mittleren sekundärseitigen Anschluss auf die Bezugserde kann eine hohe Gesamtspannung des Gleichspannungswandlers beibehalten werden. Zum Betrieb kann den Komponenten des Bordnetzes die Gesamtspannung des Gleichspannungswandlers zur Verfügung stehen. Die mit dem Bordnetz verbundenen Anschlüsse können gegenüber dem mittleren auf dem Potential der Bezugserde liegenden Anschluss betragsmäßig die gleiche Potentialdifferenz, jedoch mit entgegengesetzten Vorzeichen aufweisen. Die maximal mögliche Fehlerspannung im Bordnetz kann auf diese Weise halbiert werden, da das Fahrzeugchassis und somit die Bezugserde des Bordnetzes mittig zwischen den Extrema der im Oberleitungsbetrieb vom Gleichspannungswandler an das Bordnetz angelegten Gleichspannung liegt.

Mit dem erfindungsgemäßen Betriebsverfahren kann eine Konversion eines reinen Batterieoberleitungsfahrzeugs in ein Hybrid-Batterieoberleitungsfahrzeug ermöglicht werden, ohne dass dabei die auf den reinen Batteriebetrieb ausgelegten Komponenten des Bordnetzes durch teure, spannungsfestere Komponenten ersetzt werden müssten.

In einer Ausgestaltung der Erfindung wird der Gleichspannungswandler, insbesondere zur Rückspeisung von rekuperierter Energie in die Oberleitung, auch im Batteriebetrieb betrieben.

In einer vorteilhaften Ausgestaltung der Erfindung weist der Batteriespeicher einen oder mehrere Akkumulatoren auf.

Vorzugsweise wird detektiert, ob eine elektrische Oberleitungsverbindung zwischen den Hybrid-Batterieoberleitungsfahrzeug und einer Oberleitung, insbesondere über den Oberleitungsstromabnehmer, besteht. Durch die Detektion der elektrischen Oberleitungsverbindung kann, insbesondere durch eine Steuervorrichtung, auf einfache Weise beim Betrieb des Hybrid-Batterieoberleitungsfahrzeugs entschieden werden, ob dieses im Oberleitungsbetrieb oder im Batteriebetrieb betrieben werden soll. Abhängig von Ergebnis der Detektion kann ein Umschalten vom Batteriebetrieb in den Oberleitungsbetrieb sowie ein Umschalten vom Oberleitungsbetrieb in den Batteriebetrieb erfolgen.

Gemäß einem Ausführungsbeispiel der Erfindung wird das Hybrid-Batterieoberleitungsfahrzeug nur im Oberleitungsbetrieb betrieben, wenn eine elektrische Oberleitungsverbindung zwischen dem Hybrid-Batterieoberleitungsfahrzeug und einer Oberleitung detektiert wird. Sollte keine Oberleitungsverbindung detektiert werden, so dass über den Oberleitungsstromabnehmer, insbesondere die beiden Oberleitungsstromabnehmer, vom Hybrid-Batterieoberleitungsfahrzeug keine Energie aus der Oberleitung aufgenommen werden kann, so kann auf diese Weise vermieden werden, dass das Hybrid-Batterieoberleitungsfahrzeug im Oberleitungsbetrieb betrieben wird, ohne dass eine Energieversorgung des Hybrid-Batterieoberleitungsfahrzeugs in diesem Betriebsmodus möglich ist. Eine nicht erforderliche elektrische Verbindung des Gleichspannungswandlers mit dem Fahrzugchassis kann auf gleiche Weise verhindert werden.

Bei einer vorteilhaften Ausgestaltung wird bei einer Unterbrechung der elektrischen Oberleitungsverbindung die elektrische Verbindung zwischen dem Gleichspannungswandler und dem Fahrzeugchassis automatisch unterbrochen und in den Batteriebetrieb umgeschaltet. Durch das automatische Umschalten in den Batteriebetrieb bei einer Unterbrechung der elektrischen Oberleitungsverbindung kann der durchgängige Betrieb des Hybrid-Batterieoberleitungsfahrzeugs sichergestellt werden. Zusammen mit dem Umschalten in den Batteriebetrieb kann die elektrische Verbindung zwischen dem Gleichspannungswandler und dem Fahrzeugchassis automatisch unterbrochen werden, so dass sich die dann getrennte elektrische Verbindung nicht störend auf den Betrieb des Hybrid-Batterieoberleitungsfahrzeugs im Batteriebetrieb auswirken kann.

Ferner kann es vorteilhaft sein, wenn im Batteriebetrieb überwacht wird, ob der Gleichspannungswandler und das Fahrzeugchassis voneinander elektrisch isoliert sind. Durch diese zusätzliche Überwachung der Isolation des Gleichspannungswandlers vom Fahrzeugchassis kann im Batteriebetrieb auf einfache Art und Weise erkannt werden, ob die elektrische Verbindung zwischen dem Gleichspannungswandler und dem Fahrzeugchassis weiterhin unterbrochen ist. Isolationsfehler zwischen dem Gleichspannungswandler und dem Fahrzeugchassis können durch diese Überwachung im Batteriebetrieb auf einfache Weise erkannt werden.

Eine weitere Ausgestaltung der Erfindung sieht vor, dass bei einem Isolationsfehler, insbesondere im Batteriebetrieb, der Gleichspannungswandler automatisch vom Fahrzeugchassis und/oder der Oberleitungsstromabnehmer automatisch vom Gleichspannungswandler elektrisch getrennt wird. Durch eine automatische Trennung der elektrischen Verbindung zwischen dem Gleichspannungswandler, insbesondere der Sekundärseite des Gleichspannungswandlers, und dem Fahrzeugchassis und/oder der elektrischen Verbindung zwischen dem Oberleitungsstromabnehmer und dem Gleichspannungswandler, insbesondere der Primärseite des Gleichspannungswandlers, können bei einem Isolationsfehler effektive Schutzmaßnahmen eingeleitet werden. Bei dem Isolationsfehler kann es sich insbesondere um einen fließenden Fehlerstrom und/oder eine mangelnde oder fehlende elektrische Isolation des Gleichspannungswandlers im Batteriebetrieb vom Fahrzeugchassis handeln. Insbesondere eine Fehlfunktion beim Umschalten vom Oberleitungsbetrieb in den Batteriebetrieb, wie beispielsweise ein Fehler bei der Unterbrechung der elektrischen Verbindung zwischen dem Gleichspannungswandler und dem Fahrzeugchassis, kann durch die automatische Trennung der elektrischen Verbindung behoben werden.

Bei einem Hybrid-Batterieoberleitungsfahrzeug der eingangs genannten Art wird zur Lösung der vorstehend genannten Aufgabe vorgeschlagen, dass dieses eine Umschaltvorrichtung zur betriebsmodusabhängigen Herstellung einer elektrischen Verbindung eines mittleren sekundärseitigen Anschlusses des Gleichspannungswandlers mit dem die Bezugserde des Bordnetzes bildenden Fahrzeugchassis, insbesondere zur Reduktion von im Oberleitungsbetrieb am Bordnetz anliegenden Ausgangsspannungen des Gleichspannungswandlers relativ zur Bezugserde des Bordnetzes, aufweist.

Mit der Umschaltvorrichtung kann bei einer Umschaltung vom Batteriebetrieb in den Oberleitungsbetrieb die elektrische Verbindung zwischen dem Gleichspannungswandler und dem Fahrzeugchassis hergestellt werden. Die Bezugserde des Bordnetzes kann durch die Umschaltvorrichtung daher auf ein zwischen den Potentialen der sekundärseitigen Anschlüsse des Gleichspannungswandlers, über welche die Gleichspannung an das Bordnetz anlegbar ist, liegendes Potential festlegbar sein. Die über die sekundärseitigen Anschlüsse am Bordnetz anliegenden Ausgangsspannungen des Gleichspannungswandlers sind auf diese Weise relativ zur Bezugserde des Bordnetzes reduzierbar. Die Potentialdifferenz zwischen den am Bordnetz anliegenden Ausgangsspannungen, d. h. die Gesamtspannung des Gleichspannungswandlers, kann auf diese Weise zur Optimierung der Kosten und des Wirkungsgrades im Vergleich zur im Batteriebetrieb am Bordnetz anlegbaren Gleichspannung höher sein. Die Komponenten des Bordnetzes sind mit der Gesamtspannung versorgbar. Die Fehlerspannung zur Bezugserde ist auf diese Weise im Bordnetz reduzierbar, so dass die Komponenten des Bordnetzes keine höhere Spannungsfestigkeit aufweisen müssen. Durch die von der Umschaltvorrichtung bei der Umschaltung vom Batteriebetrieb in den Oberleitungsbetrieb herstellbare elektrische Verbindung des Gleichspannungswandlers mit dem Fahrzeugchassis können kostengünstigere und geringere Spannungsfestigkeiten aufweisende Komponenten eines reinen Batterieoberleitungsfahrzeugs verwendbar sein, ohne dass das Gefährdungspotential für Personal und Passagiere gesteigert wird.

Die im Zusammenhang mit dem erfindungsgemäßen Verfahren beschriebenen Merkmale können einzeln oder in Kombination auch bei dem Hybrid-Batterieoberleitungsfahrzeug zur Anwendung kommen. Es ergeben sich die gleichen Vorteile, welche bereits beschrieben wurden.

Bevorzugt ist die Umschaltvorrichtung mit der Sekundärseite des Gleichspannungswandlers verbunden. Auf diese Weise stellt die Umschaltvorrichtung eine sekundärseitige Umschaltvorrichtung des Hybrid-Batterieoberleitungsfahrzeugs dar.

Gemäß einer konstruktiven Ausgestaltung wird vorgeschlagen, dass die Umschaltvorrichtung ein zwischen dem Gleichspannungswandler und dem Fahrzeugchassis geschaltetes Schaltglied aufweist. Mit dem Schaltglied kann die Umschaltvorrichtung die elektrische Verbindung zwischen dem Gleichspannungswandler und dem Fahrzeugchassis auf einfache Weise beim Umschalten vom Batteriebetrieb in den Oberleitungsbetrieb herstellen und beim Umschalten vom Oberleitungsbetrieb in den Batteriebetrieb unterbrechen.

In vorteilhafter Weise ist die Umschaltvorrichtung mit einem mittleren sekundärseitigen Anschluss des Gleichspannungswandlers verbunden. Eine elektrische Verbindung dieses mittleren sekundärseitigen Anschlusses des Gleichspannungswandlers mit dem Fahrzeugchassis ist auf diese Weise durch die Umschaltvorrichtung, insbesondere deren Schaltglied, herstellbar und unterbrechbar.

Erfindungsgemäß ist das elektrische Bordnetz durch den Gleichspannungswandler galvanisch vom Oberleitungsstromabnehmer getrennt. Auf diese Weise werden die Komponenten des Bordnetzes während des Betriebs des Hybrid-Batterieoberleitungsfahrzeugs galvanisch, insbesondere doppelt-galvanisch, vom Oberleitungsstromabnehmer und damit von der Oberleitung getrennt. Ein derartiger trennender Gleichspannungswandler wird auch als Trennwandler bezeichnet.

In einer weiteren Ausführungsform der Erfindung weist das Hybrid-Batterieoberleitungsfahrzeug eine, insbesondere die Umschaltvorrichtung steuernde, Detektionsvorrichtung zur Detektion einer bestehenden elektrischen Oberleitungsverbindung mit einer Oberleitung auf. Mit der Detektionsvorrichtung kann eine bestehende elektrische Oberleitungsverbindung auf einfache Weise erkannt werden. Die Detektionsvorrichtung kann eine automatische Umschaltung vom Batteriebetrieb in den Oberleitungsbetrieb ermöglichen, sobald eine Oberleitungsverbindung detektiert wird. Alternativ oder zusätzlich kann die Detektionsvorrichtung auch dazu genutzt werden, eine Unterbrechung einer zuvor bestehenden Oberleitungsverbindung zu detektieren, um insbesondere ein automatisches Umschalten vom Oberleitungsbetrieb in den Batteriebetrieb zu ermöglichen. Um bei einem automatischen Umschalten vom Batteriebetrieb in den Oberleitungsbetrieb und/oder einem automatischen Umschalten vom Oberleitungsbetrieb in den Batteriebetrieb die elektrische Verbindung des Gleichspannungswandlers mit dem Fahrzeugchassis herstellen und/oder unterbrechen zu können, kann die Detektionsvorrichtung die Umschaltvorrichtung, insbesondere deren Schaltglied, ansteuern. Auf diese Weise kann die Umschaltvorrichtung bei der Detektion einer bestehenden oder einer unterbrochenen Oberleitungsverbindung automatisch betätigbar sein.

In einer vorteilhaften Ausgestaltung weist das Hybrid-Batterieoberleitungsfahrzeug eine Isolationsüberwachungsvorrichtung zur Überwachung der elektrischen Isolation des Bordnetzes und des Fahrzeugchassis, insbesondere im Batteriebetrieb, auf. Mit der Isolationsüberwachungsvorrichtung können Isolationsfehler im Bordnetz gegenüber dem Fahrzeugchassis auf einfache Weise erkannt werden. Insbesondere kann mit der Isolationsüberwachungsvorrichtung im Batteriebetrieb die elektrische Isolation des Gleichspannungswandlers, insbesondere der Sekundärseite des Gleichspannungswandlers, und des Fahrzeugchassis voneinander überwachbar sein.

Bei einer vorteilhaften Ausgestaltung der Erfindung weist das Hybrid-Batterieoberleitungsfahrzeug eine, insbesondere ein weiteres Schaltglied aufweisende, Linien-Schutzvorrichtung zwischen einer Primärseite des Gleichspannungswandlers und dem Oberleitungsstromabnehmer auf. Mit der Linien-Schutzvorrichtung kann eine zum Abdrahten, bei welchem der Oberleitungsstromabnehmer physisch von der Oberleitung getrennt wird, redundante Möglichkeit zur Trennung der elektrischen Verbindung des Gleichspannungswandlers mit der Oberleitung bereitgestellt werden. Durch das Schaltglied der Linien-Schutzvorrichtung kann die Primärseite des Gleichspannungswandlers schaltungstechnisch von der Oberleitung getrennt werden, auch wenn der Oberleitungsstromabnehmer sich noch in seiner angedrahteten Position befindet. Die Linien-Schutzvorrichtung kann eine schnellere Unterbrechung der elektrischen Verbindung des Gleichspannungswandlers mit der Oberleitung ermöglichen, als dies bei einem Abdrahten des Oberleitungsstromabnehmers möglich wäre. Insbesondere bei einem Isolationsfehler kann die Linien-Schutzvorrichtung das Hybrid-Batterieoberleitungsfahrzeug zu dessen Schutz freischalten, das heißt elektrisch von der Oberleitung trennen.

Weiter vorteilhaft ist es, wenn die Isolationsüberwachungsvorrichtung zur Steuerung der Umschaltvorrichtung und/oder der Linien-Schutzvorrichtung bei der Erkennung eines Isolationsfehlers, insbesondere bei der Erkennung einer elektrischen Verbindung zwischen dem Gleichspannungswandler und dem Fahrzeugchassis im Batteriebetrieb, eingerichtet ist. Mit einer derart eingerichteten Isolationsüberwachungsvorrichtung können durch die Steuerung der Umschaltvorrichtung und/oder der Linien-Schutzvorrichtung Sicherheitsmaßnahmen einleitbar sein. Bei der Erkennung eines Isolationsfehlers, insbesondere eines Fehlerstroms, kann durch die Isolationsüberwachungsvorrichtung eine elektrische Verbindung zwischen dem Gleichspannungswandler und dem Fahrzeugchassis durch Steuerung der Umschaltvorrichtung unterbrechbar und/oder das Hybrid-Batterieoberleitungsfahrzeug durch Steuerung der Linien-Schutzvorrichtung freischaltbar sein. Insbesondere im Batteriebetrieb kann eine Steuerung der Umschaltvorrichtung durch die Isolationsüberwachungsvorrichtung eine Fehlerkorrektur gestatten, wenn bei einem Umschalten vom Oberleitungsbetrieb in den Batteriebetrieb die elektrische Verbindung zwischen dem Gleichspannungswandler und dem Fahrzeugchassis nicht unterbrochen wurde und die Isolationsüberwachungsvorrichtung diese elektrische Verbindung daher erkennt.

Gemäß einer konstruktiven Ausgestaltung der Erfindung wird vorgeschlagen, dass im Bordnetz mindestens ein elektrischer Traktionsantriebsmotor, insbesondere ein Asynchronmotor, vorgesehen ist. Durch einen elektrischen Traktionsantriebsmotor im Bordnetz kann das Hybrid-Batterieoberleitungsfahrzeug durch den gleichen Motor sowohl im Oberleitungsbetrieb als auch im Batteriebetrieb fortbewegbar sein. Insbesondere ein Asynchronmotor hat sich in diesem Zusammenhang als vorteilhafte Ausgestaltung des Traktionsantriebsmotors erwiesen.

Weitere Einzelheiten und Vorteile eines erfindungsgemäßen Verfahrens sowie eines erfindungsgemäßen Hybrid-Batterieoberleitungsfahrzeugs sollen nachfolgend anhand eines in der Figur schematisch dargestellten Ausführungsbeispiels der Erfindung exemplarisch erläutert werden. Darin zeigt:

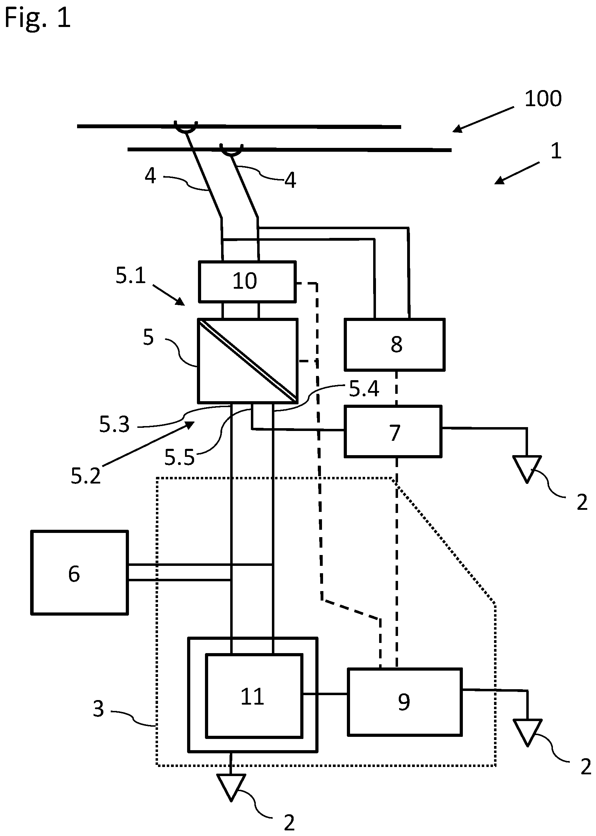

- Fig. 1: den schematischen Aufbau eines erfindungsgemäßen Hybrid-Batterieoberleitungsfahrzeugs mit bestehender elektrischer Oberleitungsverbindung.

**Fig. 1** zeigt den schematischen Aufbau eines erfindungsgemäßen Hybrid-Batterieoberleitungsfahrzeugs 1, welches elektrisch mit einer Oberleitung 100 eines Oberleitungsnetzes verbunden ist. Diese zwischen dem Hybrid-Batterieoberleitungsfahrzeug 1 und der Oberleitung 100 bestehende elektrische Oberleitungsverbindung wird über die beiden schwenkbeweglichen Oberleitungsstromabnehmer 4 des Hybrid-Batterieoberleitungsfahrzeugs 1 hergestellt. In Fig. 1 sind diese beiden Oberleitungsstromabnehmer 4 in ihrer angedrahteten Position gezeigt, in welcher sie mit den einzelnen Fahrdrähten der Oberleitung 100 physisch in Kontakt stehen und auf diese Weise eine elektrische Verbindung mit der Oberleitung 100 herstellen.

In diesem Zustand wird das Hybrid-Batterieoberleitungsfahrzeug 1 von der Oberleitung 100 mit der zu seinem Betrieb dienenden Energie versorgt. Das Hybrid-Batterieoberleitungsfahrzeug 1 befindet sich dabei in einem Oberleitungsbetrieb. In diesem Oberleitungsbetrieb verbinden die Oberleitungsstromabnehmer 4 die Oberleitung 100 über eine Linien-Schutzvorrichtung 10 mit der Primärseite 5.1 eines Gleichspannungswandlers 5. Der Gleichspannungswandler 5 wandelt dabei die dem Hybrid-Batterieoberleitungsfahrzeug 1 von der Oberleitung 100 zur Verfügung gestellte Gleichspannung, welche auf der Primärseite 5.1 am Gleichspannungswandler 5 anliegt und typischerweise 600V bis 750V beträgt, in eine Gleichspannung um, welche auf der Sekundärseite 5.2 des Gleichspannungswandlers 5 an ein Bordnetz 3 des Hybrid-Batterieoberleitungsfahrzeugs 1 angelegt wird. Zu diesem Zweck sind die beiden sekundärseitigen Anschlüsse 5.3 und 5.4 des Gleichspannungswandlers 5 mit dem Bordnetz 3 verbunden. Auf diese Weise wird an dem Bordnetz 3 die der Potentialdifferenz der sekundärseitigen Anschlüsse 5.3 und 5.4 entsprechende sekundärseitige Gesamtspannung des Gleichspannungswandlers 5 angelegt, so dass das Bordnetz 3 im Oberleitungsbetrieb über die Oberleitungsstromabnehmer 4 und den Gleichspannungswandler 5 mit Energie versorgt wird. Der Gleichspannungswandler 5 ist dabei als Trennwandler ausgestaltet, welcher das Bordnetz 3 galvanisch vom Oberleitungsstromabnehmer 4 und damit vom der Oberleitung 100 trennt.

Im Bordnetz 3 des Hybrid-Batterieoberleitungsfahrzeugs 1 sind diverse elektrische Komponenten 11, wie beispielsweise elektrische Verbraucher, angeordnet, welche über das Bordnetz 3 zum Betrieb des Hybrid-Batterieoberleitungsfahrzeugs 1 mit Energie versorgt werden. Bei diesen Komponenten 11 kann es sich beispielsweise um eine Außen- und Innenbeleuchtung, eine Klimaanlage, eine Bordsprechanlage oder eine Steuerelektronik des Hybrid-Batterieoberleitungsfahrzeugs 1 handeln. Als weitere Komponente 11 ist auch der elektrische Traktionsantriebsmotor des Hybrid-Batterieoberleitungsfahrzeugs 1 als Verbraucher im Bordnetz 3 vorgesehen, welcher durch dieses ebenfalls mit der zum Antrieb des gesamten Hybrid-Batterieoberleitungsfahrzeugs 1 genutzten Energie versorgt wird.

Neben der Energieversorgung des Bordnetzes 3 über die Oberleitungsstromabnehmer 4 und dem Gleichspannungswandler 5 weist das Hybrid-Batterieoberleitungsfahrzeug 1 zusätzlich einen Batteriespeicher 6 auf, welcher als alternative Energiequelle zur Oberleitung 100 das Bordnetz 3 in einem Batteriebetrieb mit Energie versorgt. Der Batteriespeicher 6 kann hierbei aus einem oder mehreren Akkumulatoren oder anderen kapazitiven Elementen bestehen, in welchen elektrische Energie zwischengespeichert und zum Betrieb des Hybrid-Batterieoberleitungsfahrzeugs 1 in das Bordnetz 3 eingespeist werden kann. Der Batteriespeicher 6 gestattet es zudem, bei einem Abbremsen des Hybrid-Batterieoberleitungsfahrzeugs rekuperierte Energie aufzunehmen. Auf diese Weise gestattet der Batteriespeicher 6 einen sehr energieeffizienten Betrieb des Hybrid-Batterieoberleitungsfahrzeugs.

Durch die Möglichkeit, sowohl in einem Oberleitungsbetrieb als auch in einem Batteriebetrieb betrieben zu werden, unterscheidet sich das Hybrid-Batterieoberleitungsfahrzeug 1 sowohl von einem reinen Oberleitungsfahrzeug, welches einzig über die Oberleitung 100 mit Energie versorgt wird, als auch von einem reinen Batteriefahrzeug, welches nur auf die bordeigene Batterie zur Energieversorgung zurückgreift. Mit dem Hybrid-Batterieoberleitungsfahrzeug 1 lassen sich die Vorteile beider Fahrzeugtypen daher vereinen und ihre jeweiligen Nachteile ausgleichen. So kann das Hybrid-Batterieoberleitungsfahrzeug 1 durch den Batteriespeicher 6 auch längere Strecken zurücklegen, entlang welcher keine Oberleitung 100 vorhanden ist, so dass diese durch ein reines Oberleitungsfahrzeug nicht befahrbar wären. Da es dem Hybrid-Batterieoberleitungsfahrzeug 1 möglich ist, entlang Oberleitungen 100 aufweisenden Streckenabschnitten über die Oberleitungsstromabnehmer 4 und den Gleichspannungswandler 5 durch die Oberleitung 100 mit Energie versorgt zu werden, muss die im Batteriespeicher 6 gespeicherte Energie nicht für die gesamte Fahrt genutzt werden. Vielmehr ist es sogar möglich, den Batteriespeicher 6 im Oberleitungsbetrieb über den Gleichspannungswandler 5 und das Bordnetz 3 aufzuladen, so dass im Gegensatz zu reinen Batteriefahrzeugen die Anzahl und Dauer der zum Aufladen genutzten Haltephasen reduziert werden kann.

Während im Batteriebetrieb der Batteriespeicher 6 eine vergleichsweise geringe Spannung an das Bordnetz 3 anlegt, so dass im Batteriebetrieb die Komponenten 11 des Bordnetzes 3 nur eine vergleichsweise geringe Spannungsfestigkeit aufweisen müssen, da die Fehlspannung, welche bei einem Isolationsfehler zwischen einer Komponente und dem in Fig. 2 nur angedeuteten, nicht geerdeten Fahrzeugchassis als Bezugserde abfällt, vergleichsweise gering ist, ist die im Oberleitungsbetrieb zwischen den Anschlüssen 5.3 und 5.4 an das Bordnetz 3 angelegte sekundärseitige Gesamtspannung des Gleichspannungswandlers 5 deutlich höher. Typischerweise liegt diese sekundärseitige Gesamtspannung des Gleichspannungswandlers 5 im Bereich von 500 V bis 850 V. Um nunmehr nicht Komponenten 11 im Bordnetz 3 verwenden zu müssen, welche im Vergleich zu den Erfordernissen im Batteriebetrieb eine deutlich höhere Spannungsfestigkeit aufweisen und entsprechend teurer sind, weist das erfindungsgemäße Hybrid-Batterieoberleitungsfahrzeug 1 eine Umschaltvorrichtung 7 auf.

Mit dieser Umschaltvorrichtung 7 kann ein mittlerer sekundärseitiger Anschluss 5.5 des Gleichspannungswandlers 5 elektrisch mit dem Fahrzeugchassis 2 verbunden werden. Dieser mittlere sekundärseitige Anschluss 5.5, dessen Potential zwischen den Potentialen des Anschlusses 5.3 und des Anschlusses 5.4 liegt, wird die durch das Fahrzeugchassis 2 gebildete Bezugserde des Bordnetzes 3 auf ein zwischen den Potentialen der sekundärseitigen Anschlüsse 5.3, 5.4 liegendes Potential festgelegt. Die am Bordnetz anliegenden Ausgangsspannungen der sekundärseitigen Anschlüsse 5.3 und 5.4 des Gleichspannungswandlers 5 werden auf diese Weise gegenüber der Bezugserde des Bordnetzes 3 reduziert. Die im Bordnetz 3 relativ zur Bezugserde des Fahrzeugchassis 2 maximal auftretenden Fehlerspannungen werden daher reduziert, so dass auch im Oberleitungsbetrieb Komponenten 11 mit vergleichsweise geringer Spannungsfestigkeit genutzt werden können.

Insbesondere wenn das Potential des mittleren sekundärseitigen Anschlusses 5.5 in der Mitte zwischen den Potentialen der Anschlüsse 5.3 und 5.4 liegt, sind die Ausgangsspannungen der sekundärseitigen Anschlüsse 5.3 und 5.4 bezüglich der Bezugserde betragsmäßig gleich groß und unterscheiden sich nur in ihren Vorzeichen.

Beträgt beispielsweise die Potentialdifferenz zwischen den sekundärseitigen Anschlüssen 5.3 und 5.4 800 V, so betragen die Ausgangsspannungen der sekundärseitigen Anschlüsse 5.3 und 5.4 durch die hergestellte elektrische Verbindung des mittleren sekundärseitigen Anschlusses 5.5 mit dem Fahrzeugchassis 2 nur +400 V bzw. -400 V gegenüber der Bezugserde des Bordnetzes 3. Die im Bordnetz 3 relativ zur Bezugserde des Fahrzeugchassis 2 maximal auftretenden Fehlerspannungen betragen daher betragsmäßig ebenfalls maximal 400 V.

Zusätzlich zur Umschaltvorrichtung 7 weist das Hybrid-Batterieoberleitungsfahrzeug 1 eine Detektionsvorrichtung 8 auf, mit welcher das Bestehen einer elektrischen Oberleitungsverbindung detektiert werden kann. Diese Detektionsvorrichtung 8 ist dabei dem Gleichspannungswandler 5 auf dessen Primärseite 5.1 vorgeschaltet und steht in elektrischer Verbindung mit den Oberleitungsabnehmern 4. Dies ermöglicht es der Detektionsvorrichtung 8, auf einfache Weise zu detektieren, ob eine Oberleitungsverbindung über die Oberleitungsstromabnehmer 4 besteht oder die Oberleitungsverbindung zur Oberleitung 100 unterbrochen wurde.

Damit der mittlere sekundärseitige Anschluss 5.5 des Gleichspannungswandlers 5 nur während des Oberleitungsbetriebs elektrisch mit dem Fahrzeugchassis 2 verbunden ist, da eine elektrische Verbindung zwischen dem Gleichspannungswandler 5 und dem Fahrzeugchassis 2 während des Batteriebetriebs ansonsten zu Störungen führen kann, ist die Detektionsvorrichtung 8 zudem derart ausgestaltet, dass sie die Umschaltvorrichtung 7 direkt steuern kann. In Fig. 1 ist diese Steuerungsmöglichkeit durch eine gestrichelte Linie angedeutet. Sobald die Detektionsvorrichtung 8 eine Unterbrechung der elektrischen Oberleitungsverbindung detektiert, kann diese selbstständig die Umschaltvorrichtung 7 steuern und auf diese Weise die elektrische Verbindung zwischen dem Gleichspannungswandler 5 und dem Fahrzeugchassis 2 automatisch unterbrechen.

Neben der Detektionsvorrichtung 8 weist das Hybrid-Batterieoberleitungsfahrzeug 1 mit der Isolationsüberwachungsvorrichtung 9 eine weitere Überwachungsvorrichtung auf. Mit der Isolationsüberwachungsvorrichtung 9 wird dabei überwacht, ob es zwischen den Komponenten 11 des Bordnetzes 3 und dem Fahrzeugchassis 2 zu Isolationsfehlern und insbesondere zu Fehlerströmen kommt. Um als Schutzmaßnahme das Hybrid-Batterieoberleitungsfahrzeug 1 dann im Oberleitungsbetrieb freizuschalten, d. h. möglichst schnell von der Oberleitung 10 elektrisch zu trennen, kann die Isolationsüberwachungsvorrichtung 9 die Linien-Schutzvorrichtung 10 ansteuern. In Fig. 1 sind auch die Steuerverbindungen, über welche die Isolationsüberwachungsvorrichtung 9 andere Vorrichtungen ansteuern kann, durch gestrichelte Linien angedeutet.

Die Linien-Schutzvorrichtung 10 weist Schaltglieder auf, welche die elektrische Verbindung zwischen den Oberleitungsstromabnehmern 4 und dem Gleichspannungswandler 5 unterbrechen können. Werden die Schaltglieder der Linien-Schutzvorrichtung 10 betätigt, so wird über die Oberleitungsstromabnehmer 4 keine Energie mehr von der Oberleitung 100 an den Gleichspannungswandler 5 weitergeleitet, so dass das Hybrid-Batterieoberleitungsfahrzeug 1 insoweit freigeschaltet ist. Die Linien-Schutzvorrichtung 10 ermöglicht dabei eine schnellere Reaktion und ein entsprechend schnelleres Freischalten, als dies durch das physische Verschwenken der Oberleitungsstromabnehmer 4 bei einem Abdrahten von der Oberleitung 100 möglich wäre.

Zusätzlich zu der allgemeinen Überwachung der Isolation der Komponenten 11 des Bordnetzes 3 dient die Isolationsüberwachungsvorrichtung 9 im Batteriebetrieb zusätzlich zur Überwachung der Isolation der Sekundärseite 5.2 des Gleichspannungswandlers 5 vom Fahrzeugchassis 2. Sollte die Isolationsüberwachungsvorrichtung 9 dabei feststellen, dass im Batteriebetrieb weiterhin eine elektrische Verbindung zwischen dem Gleichspannungswandler 5 und dem Fahrzeugchassis 2 besteht, beispielsweise da bei der Steuerung der Umschaltvorrichtung 7 durch die Detektionsvorrichtung 8 ein Fehler aufgetreten ist, kann die Isolationsüberwachungsvorrichtung 9 auch die Umschaltvorrichtung 7 steuern. Auf diese Weise ist es der Isolationsüberwachungsvorrichtung 9 möglich, einen Fehler beim Umschalten vom Oberleitungsbetrieb in den Batteriebetrieb, bei welchem auch die elektrische Verbindung zwischen dem Gleichspannungswandler 5 und dem Fahrzeugchassis 2 automatisch unterbrochen werden sollte, zu beheben. Mit der Isolationsüberwachungsvorrichtung 9 kann daher sichergestellt werden, dass eine elektrische Verbindung des Anschlusses 5.5 des Gleichspannungswandlers 5 mit dem Fahrzeugchassis 2 ausschließlich im Oberleitungsbetrieb besteht.

Mit Hilfe des vorstehend beschriebenen Verfahrens sowie dem erfindungsgemäßen Hybrid-Batterieoberleitungsfahrzeug 1 ist es möglich, hinsichtlich ihrer Spannungsfestigkeit auf Gleichspannungen im Batteriebetrieb ausgelegte Komponenten 11, insbesondere Komponenten 11 eines reinen Batterieoberleitungsfahrzeugs, zum Betrieb des Hybrid-Batterieoberleitungsfahrzeugs 1 ohne Steigerung des Gefährdungspotentials für Personal und Passagiere auf kostengünstige Art und Weise zu ermöglichen.

### BEZUGSZEICHENLISTE

- 1: Hybrid-Batterieoberleitungsfahrzeug
- 2: Fahrzeugchassis
- 3: Bordnetz
- 4: Oberleitungsstromabnehmer
- 5: Gleichspannungswandler
- 5.1: Primärseite
- 5.2: Sekundärseite
- 5.3: sekundärseitiger Anschluss
- 5.4: sekundärseitiger Anschluss
- 5.5: sekundärseitiger Anschluss
- 6: Batteriespeicher
- 7: Umschaltvorrichtung
- 8: Detektionsvorrichtung
- 9: Isolationsüberwachungsvorrichtung
- 10: Linien-Schutzvorrichtung
- 11: Komponenten

- 100: Oberleitung

## Patentansprüche

1. Verfahren zum Betrieb eines Hybrid-Batterieoberleitungsfahrzeugs (1), welches ein nicht geerdetes Fahrzeugchassis (2), ein elektrisches Bordnetz (3), einen Oberleitungsstromabnehmer (4), einen Gleichspannungswandler (5) und einen Batteriespeicher (6) aufweist, wobei das Hybrid-Batterieoberleitungsfahrzeug (1) zwischen einem Oberleitungsbetrieb, in welchem das Bordnetz (3) über den Oberleitungsstromabnehmer (4) und den Gleichspannungswandler (5) mit Energie versorgt wird, wobei das Bordnetz (3) an sekundärseitige Anschlüsse (5.3, 5.4) des Gleichspannungswandlers (5) angeschlossen ist, und einem Batteriebetrieb, in welchem das Bordnetz (3) über den Batteriespeicher (6) mit Energie versorgt wird, umgeschaltet wird, wobei das elektrische Bordnetz (3) durch den Gleichspannungswandler (5) galvanisch vom Oberleitungsstromabnehmer (4) getrennt ist,
**dadurch gekennzeichnet, dass**
bei der Umschaltung vom Batteriebetrieb in den Oberleitungsbetrieb ein mittlerer sekundärseitiger Anschluss (5.5) des Gleichspannungswandlers (5) zur Reduktion von am Bordnetz (3) anliegenden Ausgangsspannungen des Gleichspannungswandlers (5) relativ zur Bezugserde des Bordnetzes (3) elektrisch mit dem Fahrzeugchassis (2), welches die Bezugserde bildet, verbunden wird.

2. Verfahren nach Anspruch 1,
**dadurch gekennzeichnet, dass**
detektiert wird, ob eine elektrische Oberleitungsverbindung zwischen dem Hybrid-Batterieoberleitungsfahrzeug (1) und einer Oberleitung (100), insbesondere über den Oberleitungsstromabnehmer (4), besteht.

3. Verfahren nach einem der vorhergehenden Ansprüche,
**dadurch gekennzeichnet, dass**
das Hybrid-Batterieoberleitungsfahrzeug (1) nur im Oberleitungsbetrieb betrieben wird, wenn eine elektrische Oberleitungsverbindung zwischen dem Hybrid-Batterieoberleitungsfahrzeug (1) und einer Oberleitung (100) detektiert wird.

4. Verfahren nach einem der Ansprüche 2 oder 3,
**dadurch gekennzeichnet, dass**
bei einer Unterbrechung der elektrischen Oberleitungsverbindung die elektrische Verbindung zwischen dem Gleichspannungswandler (5) und dem Fahrzeugchassis (2) automatisch unterbrochen und in den Batteriebetrieb umgeschaltet wird.

5. Verfahren nach einem der vorhergehenden Ansprüche,
**dadurch gekennzeichnet, dass**
im Batteriebetrieb überwacht wird, ob der Gleichspannungswandler (5) und das Fahrzeugchassis (2) voneinander elektrisch isoliert sind.

6. Verfahren nach einem der vorhergehenden Ansprüche,
**dadurch gekennzeichnet, dass**
bei einem Isolationsfehler, insbesondere im Batteriebetrieb, der Gleichspannungswandler (5) automatisch vom Fahrzeugchassis (2) und/oder der Oberleitungsstromabnehmer (4) automatisch vom Gleichspannungswandler (5) elektrisch getrennt wird.

7. Hybrid-Batterieoberleitungsfahrzeug mit einem nicht geerdeten Fahrzeugchassis (2), einem elektrischen Bordnetz (3), einem Oberleitungsstromabnehmer (4) und einem Gleichspannungswandler (5) zur Energieversorgung des Bordnetzes (3) in einem Oberleitungsbetrieb, wobei das Bordnetz (3) an sekundärseitige Anschlüsse (5.3, 5.4) des Gleichspannungswandlers (5) angeschlossen ist, und einem Batteriespeicher (6) zur Energieversorgung des Bordnetzes (3) in einem Batteriebetrieb, wobei das elektrische Bordnetz (3) durch den Gleichspannungswandler (5) galvanisch vom Oberleitungsstromabnehmer (4) getrennt ist,
**gekennzeichnet durch**
eine Umschaltvorrichtung (7) zur betriebsmodusabhängigen Herstellung, nämlich bei einer Umschaltung vom Batteriebetrieb in den Oberleitungsbetrieb, einer elektrischen Verbindung eines mittleren sekundärseitigen Anschlusses (5.5) des Gleichspannungswandlers (5) mit dem die Bezugserde des Bordnetzes (3) bildenden Fahrzeugchassis (2) zur Reduktion von im Oberleitungsbetrieb am Bordnetz (3) anliegenden Ausgangsspannungen des Gleichspannungswandlers (5) relativ zur Bezugserde des Bordnetzes (3).

8. Hybrid-Batterieoberleitungsfahrzeug nach Anspruch 7,
**dadurch gekennzeichnet, dass**
die Umschaltvorrichtung (7) ein zwischen dem Gleichspannungswandler (5) und dem Fahrzeugchassis (2) geschaltetes Schaltglied aufweist.

9. Hybrid-Batterieoberleitungsfahrzeug nach einem der Ansprüche 7 oder 8,
**gekennzeichnet durch**
eine, insbesondere die Umschaltvorrichtung (7) steuernde, Detektionsvorrichtung (8) zur Detektion einer bestehenden elektrischen Oberleitungsverbindung mit einer Oberleitung (100).

10. Hybrid-Batterieoberleitungsfahrzeug nach einem der Ansprüche 7 bis 9,
**gekennzeichnet durch**
eine Isolationsüberwachungsvorrichtung (9) zur Überwachung der elektrischen Isolation des Bordnetzes (3) und des Fahrzeugchassis (2), insbesondere im Batteriebetrieb.

11. Hybrid-Batterieoberleitungsfahrzeug nach einem der Ansprüche 7 bis 10,
**gekennzeichnet durch**
eine, insbesondere ein weiteres Schaltglied aufweisende, Linien-Schutzvorrichtung (10) zwischen einer Primärseite (5.1) des Gleichspannungswandlers (5) und dem Oberleitungsstromabnehmer (4).

12. Hybrid-Batterieoberleitungsfahrzeug nach einem der Ansprüche 10 oder 11,
**dadurch gekennzeichnet, dass**
die Isolationsüberwachungsvorrichtung (9) zur Steuerung der Umschaltvorrichtung (7) und/oder der Linien-Schutzvorrichtung (10) bei der Erkennung eines Isolationsfehlers, insbesondere bei der Erkennung einer elektrischen Verbindung zwischen dem Gleichspannungswandler (5) und dem Fahrzeugchassis (2) im Batteriebetrieb, eingerichtet ist.

13. Hybrid-Batterieoberleitungsfahrzeug nach einem der Ansprüche 7 bis 12,
**dadurch gekennzeichnet, dass**
im Bordnetz (3) mindestens ein elektrischer Traktionsantriebsmotor (11), insbesondere ein Asynchronmotor, vorgesehen ist.

## Claims

1. Method for operating a hybrid battery trolley vehicle (1) comprising an ungrounded vehicle chassis (2), a vehicle electrical system (3), an overhead line current collector (4), a DC/DC converter (5) and a battery storage (6) wherein the hybrid battery trolley vehicle (1) is switched between an overhead line mode, in which the vehicle electrical system (3) is supplied with energy via the overhead line current collector (4) and the DC/DC converter (5),
wherein the vehicle electrical system (3) is connected to secondary-side connections (5.3, 5.4) of the DC/DC converter (5), and a battery mode, in which the vehicle electrical system (3) is supplied with energy via the battery storage (6) wherein the vehicle electrical system (3) is galvanically isolated from the overhead line current collector (4) by the DC/DC converter (5),
**characterized in that**
when switching from battery mode to overhead line mode, an intermediate secondary-side connection (5.5) of the DC/DC converter (5) is electrically connected to the vehicle chassis (2), that forms a reference ground of the vehicle electrical system (3), to reduce the output voltages of the DC/DC converter (5) present on the vehicle electrical system (3) relative to the reference ground.

2. Method according to claim 1, **characterized in that** it is detected whether there is an electrical overhead line connection between the hybrid battery trolley vehicle (1) and an overhead line (100), in particular via the overhead line current collector (4).

3. Method according to one of the preceding claims, **characterized in that** the hybrid battery trolley vehicle (1) is only operated in overhead line mode if an electrical overhead line connection between the hybrid battery trolley vehicle (1) and an overhead line (100) is detected.

4. Method according to one of the claims 2 or 3, **characterized in that** if the overhead line connection is interrupted, the electrical connection between the DC/DC converter (5) and the vehicle chassis (2) is automatically interrupted and a switch is made to the battery mode.

5. Method according to one of the preceding claims, **characterized in that** in battery mode, it is monitored whether the DC/DC converter (5) and the vehicle chassis (2) are electrically isolated from each other.

6. Method according to one of the preceding claims, **characterized in that** in the event of an insulation fault, in particular in battery mode, the DC/DC converter (5) is automatically disconnected from the vehicle chassis (2) and/or the overhead line current collector (4) is automatically disconnected from the DC/DC converter (5).

7. Hybrid battery trolley vehicle with an ungrounded vehicle chassis (2), a vehicle electrical system (3), an overhead line current collector (4) and a DC/DC converter (5) for supplying energy to the vehicle electrical system (3) in an overhead line mode, wherein the vehicle electrical system (3) is connected to secondary-side connections (5.3, 5.4) of the DC/DC converter (5), and a battery storage (6) for supplying energy to the vehicle electrical system (3) in a battery mode, wherein the vehicle electrical system (3) is galvanically isolated from the overhead line current collector (4) by the DC/DC converter (5), **characterized by** a switching device (7) for establishing an operating mode depending electrical connection, namely when switching from battery mode to overhead line mode, between an intermediate secondary-side connection (5.5) of the DC/DC converter (5) and the vehicle chassis (2) forming a reference ground of the vehicle electrical system (3) for reducing the output voltages of the DC/DC converter (5) present at the vehicle electrical system (3) relative to the reference ground during overhead line mode.

8. Hybrid battery trolley vehicle according to claim 7, **characterized in that** the switching device (7) has a switching element connected between the DC/DC converter (5) and the vehicle chassis (2).

9. Hybrid battery trolley vehicle according to one of the claims 7 or 8, **characterized by** a detection device (8), in particular controlling the switching device (7), for detecting an existing electrical overhead line connection with an overhead line (100).

10. Hybrid battery trolley vehicle according to one of the claims 7 to 9, **characterized by** an insulation monitoring device (9) for monitoring the electrical insulation of the vehicle electrical system (3) and the vehicle chassis (2), in particular in battery mode.

11. Hybrid battery trolley vehicle according to one of the claims 7 to 10, **characterized by** a line protection device (10), in particular having a further switching element, between a primary side (5.1) of the DC/DC converter (5) and the overhead line current collector (4).

12. Hybrid battery trolley vehicle according to one of the claims 10 or 11, **characterized in that** the insulation monitoring device (9) is configured to control the switching device (7) and/or the line protection device (10) when an insulation fault is detected, in particular when an electrical connection between the DC/DC converter (5) and the vehicle chassis (2) in battery mode is detected.

13. Hybrid battery trolley vehicle according to one of the claims 7 to 12, **characterized in that** at least one electric traction drive motor (11), in particular an asynchronous motor, is provided in the vehicle electrical system (3).

## Revendications

1. Procédé de fonctionnement d'un véhicule hybride à caténaire et batterie (1), lequel possède un châssis de véhicule (2) non mis à la terre, un réseau de bord électrique (3), un collecteur de courant sur caténaire (4), un convertisseur de tension continue (5) et un accumulateur à batterie (6), le véhicule hybride à caténaire et batterie (1) étant permuté entre un fonctionnement sur caténaire, dans lequel le réseau de bord (3) est alimenté en énergie par l'intermédiaire du collecteur de courant sur caténaire (4) et du convertisseur de tension continue (5), le réseau de bord (3) étant raccordé à des bornes côté secondaire (5.3, 5.4) du convertisseur de tension continue (5), et un fonctionnement sur batterie, dans lequel le réseau électrique de bord (3) est alimenté en énergie par l'intermédiaire de l'accumulateur à batterie (6), le réseau de bord électrique (3) étant déconnecté galvaniquement du collecteur de courant sur caténaire (4) par le convertisseur de tension continue (5),
**caractérisé en ce que**
lors de la permutation du fonctionnement sur batterie au fonctionnement sur caténaire, une borne intermédiaire du côté secondaire (5.5) du convertisseur de tension continue (5) est reliée électriquement au châssis de véhicule (2), lequel forme la terre de référence, afin de réduire les tensions de sortie du convertisseur de tension continue (5) présentes au niveau du réseau de bord (3) par rapport à la terre de référence du réseau de bord (3).

2. Procédé selon la revendication 1,
**caractérisé en ce que**
il est détecté s'il existe une connexion de caténaire électrique entre le véhicule hybride à caténaire et batterie (1) et une caténaire (100), en particulier par l'intermédiaire du collecteur de courant sur caténaire (4).

3. Procédé selon l'une des revendications précédentes,
**caractérisé en ce que**
le véhicule hybride à caténaire et batterie (1) ne fonctionne en mode sur caténaire que lorsqu'une connexion de caténaire électrique entre le véhicule hybride à caténaire et batterie (1) et une caténaire (100) est détectée.

4. Procédé selon l'une des revendications 2 ou 3,
**caractérisé en ce que**
dans le cas d'une interruption de la connexion de caténaire électrique, la connexion électrique entre le convertisseur de tension continue (5) et le châssis de véhicule (2) est automatiquement interrompue et une permutation vers le fonctionnement sur batterie a lieu.

5. Procédé selon l'une des revendications précédentes,
**caractérisé en ce que**
lors du fonctionnement sur batterie, l'isolation électrique mutuelle entre le convertisseur de tension continue (5) et le châssis de véhicule (2) est surveillée.

6. Procédé selon l'une des revendications précédentes,
**caractérisé en ce que**
dans le cas d'un défaut d'isolation, notamment en fonctionnement sur batterie, le convertisseur de tension continue (5) est automatiquement déconnecté électriquement du châssis de véhicule (2) et/ou le collecteur de courant sur caténaire (4) automatiquement du convertisseur de tension continue (5).

7. Véhicule hybride à caténaire et batterie comprenant un châssis de véhicule non mis à la terre (2), un réseau de bord électrique (3), un collecteur de courant sur caténaire (4) et un convertisseur de tension continue (5) destiné à l'alimentation en énergie du réseau de bord (3) dans un fonctionnement sur caténaire, le réseau de bord (3) étant raccordé à des bornes côté secondaire (5.3, 5.4) du convertisseur de tension continue (5), et un accumulateur à batterie (6) destiné à l'alimentation en énergie du réseau de bord (3) dans un fonctionnement sur batterie, le réseau de bord (3) étant déconnecté électriquement du collecteur de courant sur caténaire (4) par le convertisseur de tension continue (5),
**caractérisé par**
un dispositif de permutation (7) destiné à établir, en fonction du mode de fonctionnement, à savoir lors d'une permutation du fonctionnement sur batterie au fonctionnement sur caténaire, une connexion électrique d'une borne intermédiaire du côté secondaire (5.5) du convertisseur de tension continue (5) au châssis de véhicule (2) formant la terre de référence du réseau de bord (5) afin de réduire les tensions de sortie du convertisseur de tension continue (5) présentes au niveau du réseau de bord (3) pendant le fonctionnement sur caténaire par rapport à la terre de référence du réseau de bord (3).

8. Véhicule hybride à caténaire et batterie selon la revendication 7,
**caractérisé en ce que**
le dispositif de permutation (7) possède un élément de commutation branché entre le convertisseur de tension continue (5) et le châssis de véhicule (2).

9. Véhicule hybride à caténaire et batterie selon l'une des revendications 7 ou 8,
**caractérisé par**
un dispositif de détection (8), en particulier qui commande le dispositif de permutation (7), destiné à détecter une connexion de caténaire électrique existante avec une caténaire (100).

10. Véhicule hybride à caténaire et batterie selon l'une des revendications 7 à 9,
**caractérisé par**
un dispositif de surveillance d'isolation (9) destiné à surveiller l'isolation électrique du réseau de bord (3) et du châssis de véhicule (2), en particulier en fonctionnement sur batterie.

11. Véhicule hybride à caténaire et batterie selon l'une des revendications 7 à 10,
**caractérisé par**
un dispositif de protection de ligne (10), possédant notamment un élément de commutation supplémentaire, entre un côté primaire (5.1) du convertisseur de tension continue (5) et le collecteur de courant sur caténaire (4).

12. Véhicule hybride à caténaire et batterie selon l'une des revendications 10 ou 11,
**caractérisé en ce que**
le dispositif de surveillance d'isolation (9) est conçu pour commander le dispositif de permutation (7) et/ou le dispositif de protection de ligne (10) lors de la reconnaissance d'un défaut d'isolation, en particulier lors de la reconnaissance d'une connexion électrique entre le convertisseur de tension continue (5) et le châssis de véhicule (2) en fonctionnement sur batterie.

13. Véhicule hybride à caténaire et batterie selon l'une des revendications 7 à 12,
**caractérisé en ce que**
au moins un moteur de traction électrique (11), en particulier un moteur asynchrone, est prévu dans le réseau de bord (3).
